(19) **Europäisches Patentamt**

**European Patent Office**

**Office européen des brevets**

(11) **EP 1 451 250 B1**

(12) **EUROPÄISCHE PATENTSCHRIFT**

(45) Veröffentlichungstag und Bekanntmachung des Hinweises auf die Patenterteilung:
**24.05.2006 Patentblatt 2006/21**

(21) Anmeldenummer: **02795058.3**

(22) Anmeldetag: **29.10.2002**

(51) Int Cl.:
*C08L 33/04* *(2006.01)*       *C08K 5/101* *(2006.01)*
*C09D 7/06* *(2006.01)*

(86) Internationale Anmeldenummer:
**PCT/EP2002/012048**

(87) Internationale Veröffentlichungsnummer:
**WO 2003/040234 (15.05.2003 Gazette 2003/20)**

(54) **GIESSBARE ZUSAMMENSETZUNGEN**

CASTABLE COMPOSITIONS

COMPOSITIONS COULABLES

(84) Benannte Vertragsstaaten:
**AT BE BG CH CY CZ DE DK EE ES FI FR GB GR IE IT LI LU MC NL PT SE SK TR**

(30) Priorität: **07.11.2001 DE 10154626**

(43) Veröffentlichungstag der Anmeldung:
**01.09.2004 Patentblatt 2004/36**

(73) Patentinhaber: **Cognis Deutschland GmbH & Co. KG**
**40789 Monheim (DE)**

(72) Erfinder:
• SCHIEFERSTEIN, Ludwig
  40882 Ratingen (DE)
• GORZINSKI, Manfred
  40227 Düsseldorf (DE)
• FROMMELIUS, Harald
  40789 Monheim (DE)
• BUDTKE, Sonja
  42859 Remscheid (DE)
• SCHULTE, Heinz-Günther
  45481 Mülheim (DE)

(56) Entgegenhaltungen:
**WO-A-96/06897       DE-A- 19 850 214**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

**Gebiet der Erfindung**

Die Erfindung betrifft bei 25° C flüssige und gießbare Zusammensetzungen bestehend aus einem Trägermedium, wobei es sich um ein oder mehrere Ester von Fettsäuren mit 8 bis 22 C-Atomen und 1- oder mehrwertigen Alkoholen handelt und ein oder mehreren Polyacrylaten. Diese Zusammensetzungen eignen sich in hervorragender Weise zur Herstellung Verlaufshilfsmitteln.

**Stand der Technik**

Flüssige Polyacrylat-basierte Verlaufmittel werden in der Regel batchweise nach hauptsächlich zwei Verfahren hergestellt:

- ohne Konfektionierungsmittel: Dies hat in der Regel den Nachteil, daß das entstehende Polymer eine sehr breite Molgewichtsverteilung hat. Dies führt beim Einsatz in Pulverlacken dazu, das die Dosierbarkeit schwierig ist, weil einerseits die Verlaufwirkung nicht ausreicht oder es andererseits zu Migration aus den Pulverlackfilmen kommen kann.
- mit Konfektionierungsmittel: Zur besseren Kontrolle der Molgewichtsverteilung werden gut verträgliche Substanzen, die nicht abdestilliert werden müssen, wie etwa Guerbetalkohole als Polymerisationshilfsmittel eingesetzt. Leider haben Untersuchungen der Anmelderin gezeigt, daß die Hilfsmittel, insbesondere Guerbetalkohole, beim Einbrennprozess (bei Temperaturen von etwa 200 °C) sich nicht nur teilweise verflüchtigen, zu stark rauchendem, beißendem Qualm führen.

**Beschreibung der Erfindung**

Aufgabe der vorliegenden Erfindung war es, Zusammensetzungen bereitzustellen, die aus einem Trägermedium und ein oder mehreren Polyacrylaten bestehen und den folgenden Bedingungen genügen: Die Zusammensetzungen sollten bei 25 °C flüssig, homogen, konzentriert, gießbar, lagerstabil und weitgehend VOC-frei sein. Insbesondere sollten sich diese Zusammensetzungen zur Verwendung als Verlaufshilfsmittel eignen. Diese Verlaufshilfsmittel sollten sich im Vergleich zu herkömmlichen Verlaufshilfsmitteln durch neben einer deutliche Reduzierung von Emissionen (weitgehende VOC-Freiheit) durch eine gute Allgemeinverträglichkeit in Pulverlacken auszeichnen.
Unter "homogen" wird verstanden, daß die Polyacrylate homogen in dem Trägermedium verteilt sind. Unter "konzentriert" wird verstanden, daß die Polyacrylate zu mindestens 20 Gew.-% - bezogen auf die gesamte Zusammensetzung - enthalten sind. Unter "gießbar" wird verstanden, daß die Viskosität der Zusammensetzung - gemessen bei 25 °C nach Brookfield bei 10 Umdrehungen pro Minute unterhalb von 50000 mPas liegt. Unter "lagerstabil" wird verstanden, daß die Zusammensetzung auch bei längerer Lagerung stabil bleibt und zwar sowohl in chemischer Hinsicht (keine Zersetzung der Komponenten) als auch im Hinblick auf die Konsistenz (kein Verlust der Homogenität). Unter "weitgehend VOC-frei" wird verstanden, daß die Zusammensetzung praktisch keine flüchtigen Substanzen enthält. Dies bedeutet insbesondere, daß das Trägermedium der Zusammensetzung schwerflüchtig ist.
Das Trägermedium sollte ferner so beschaffen sein, daß keine nachteiligen Wechselwirkungen auftreten, wenn die Zusammensetzung aus Trägermedium und Dispergator zur Herstellung einer Lackrezeptur eingesetzt wird, wobei es ja zwangsläufig in Kontakt mit Filmbildnem, Pigmenten, Füllstoffen und/oder Lackadditiven kommt.
Gegenstand der Erfindung sind bei 25° C flüssige und gießbare **Zusammensetzungen** zur Konfektionierung von Verlaufshilfsmitteln auf Basis von Polyacrylaten, bestehend aus

a) 10 bis 80 Gew.-% eines Trägermediums, wobei es sich um ein oder mehrere Ester von Fettsäuren mit 8 bis 22 C-Atomen und 1- oder mehrwertigen Alkoholen handelt und

b) 20 bis 90 Gew.-% eines oder mehrerer Polyacrylate.

Überraschenderweise wurde gefunden, daß die erfindungsgemäßen Zusammensetzungen die oben genannte Aufgabe in jeder Hinsicht ausgezeichnet lösen. Die Zusammensetzungen sind flüssig, homogen, gießbar und lagerstabil. Sie zeichnen sich ferner durch weitgehende VOC-Freiheit aus.
Der Gehalt einer Zusammensetzung an VOC kann nach dem Fachmann einschlägig bekannten Methoden bestimmt werden. Im Rahmen der vorliegenden Erfindung wird unter weitgehender VOC-Freiheit ein VOC-Wert von weniger als 0,5% und vorzugsweise von weniger als 0,2 % - bezogen auf die gesamte Zusammensetzung - verstanden. Der Gehalt einer Probe an VOC dabei wird im Rahmen der vorliegenden Erfindung in Anlehnung an die DIN 75201 ("Bestimmung des Fogging-Verhaltens von Werkstoffen der Kraftfahrzeug-Innenausstattung") bestimmt und zwar durch folgendes Verfahren: Die Probe wird auf den Boden eines Bechers aus Glas ohne Ausguß mit festgelegten Maßen gebracht. Der Becher wird mit einer Aluminiumfolie abgedeckt, an der flüchtige Bestandteile aus dem Probekörper bzw. der Probe kondensieren können. Diese Aluminiumfolie wird gekühlt. Der so vorbereitete Becher wird 16 Stunden in einen auf Prüftemperatur von 100 ± 0,3 °C befindlichen Badthermostaten hineingestellt. Die Wirkung des Fogging-Niederschlages auf der Aluminiumfolie wird quantitativ durch Wägung der Folie vor und nach dem Fogging-Versuch erfaßt. Der VOC-Wert wird nach folgender Gleichung berechnet:

$$\text{VOC-Wert (\%)} = (A/B) * 100$$

Dabei bedeuten:

A = Menge des Fogging-Niederschlages (in g)
B = Menge der eingesetzten Probe (in g)

Darüber hinaus sind die erfindungsgemäßen Zusammensetzungen mit Filmbildnern, Pigmenten, Füllstoffen und Lackadditiven, die bei der Herstellung von Lackrezepturen üblicherweise eingesetzt werden, kompatibel.

Bei dem **Komponente a)** handelt es sich um Ester von Fettsäuren mit 8 bis 22 C-Atomen und 1- oder mehrwertigen Alkoholen. Diese fungieren als Trägermedium für Komponente b). Sie können einzeln oder im Gemisch untereinander eingesetzt werden. Hinsichtlich der Natur der Ester bestehen an sich keinerlei Einschränkungen.

In einer Ausführungsform setzt man als Komponente a) Ester von Fettsäuren mit 8 bis 22 C-Atomen und Fettalkoholen mit 8 bis 22 C-Atomen ein. Geeignete <u>Fettsäurebausteine</u> dieser Ester sind: Octansäure, 2-Ethyl-hexansäure, Decansäure, Laurinsäure, Tridecansäure, Isotridecansäure, Myristinsäure, Pentadecansäure, Palmitinsäure, Heptadecansäure, Stearinsäure, 12-Hydroxystearinsäure, Nonadecansäure, Arachinsäure, Heneicosansäure, Behensäure, 10-Undecensäure, Lauroleinsäure, Myristoleinsäure, Palmitoleinsäure, Ölsäure, Petroselinsäure, Elaidinsäure, Ricinolsäure, Linolsäure, Linolaidinsäure, Linolensäure, Eläostearinsäure, Gadoleinsäure, Arachidonsäure, Erucasäure, Brassidinsäure, Clupanodonsäure. Geeignete <u>Fettalkoholbausteine</u> der Ester sind: Octanol, 2-Ethylhexanol, Pelargonalkohol, Decanol, Undecanol, Laurylalkohol, Tridecylalkohol, Isotridecylalkohol, Myristinalkohol, Pentadecanol, Palmitylalkohol, Heptadecanol, Stearylalkohol, Nonadecanol, Arachidylalkohol, Heneicosanol, Behenylalkohol, Tricosanol, Lignocerylalkohol, 10-Undecanol, Oleylalkohol, Elaidylalkohol, Ricinolalkohol, Linoleylalkohol, Linolenylalkohol, Gadoleylalkohol, Arachidonalkohol, Erucaalkohol, Brassidylalkohol.

In einer Ausführungsform setzt man als Komponente a) Pentaerythrit-adipat-oleat ein (CAS-Nummer 68130-33-6).

Eine besonders bevorzugte Komponente a) ist Isotridecylstearat.

In einer anderen Ausführungsform setzt man als Komponente a) Ester von Fettsäuren mit 8 bis 22 C-Atomen und Glycerin ein. Es handelt sich hier um dem Fachmann bekannte Verbindungen, die auch als Fette und Öle bezeichnet werden.

Bei **Komponente b)** handelt es sich um Polyacrylate, worunter im Rahmen der vorliegenden Erfindung Polymere verstanden werden, die Acrylsäure und/oder Methacrylsäure-Bausteine enthalten. Hinsichtlich der Natur der Polyacrylate bestehen an sich keinerlei Einschränkungen. Es kann sich um Polymere handeln, die einheitlich aus einem einzigen Monomer-Typ oder aus unterschiedlichen Monomer-Typ aufgebaut sind, also um Homo- oder Copolymere.

In einer Ausführungsform setzt man als Polyacrylate Poly-Alkyl-Acrylate mit einem mittleren Molekulargewicht im Bereich von 3.000 bis 100.000 kg/kmol ein. Als Alkyl-Gruppe sind dabei Methyl-, Ethyl-, Propyl-, Butyl-, Ethyl-hexyl besonders bevorzugt. Die Poly-Alkyl-Acrylate können als Homo- oder Copolymere vorliegen.

In einer. Ausführungsform setzt man als Komponente b) Copolymere aus Butylacrylat und 2-Ethylhexylacrylat ein.

Ein weiterer Erfindungsgegenstand sind bei 25° C flüssige und gießbare **Zusammensetzungen** zur Konfektionierung von Verlaufshilfsmitteln auf Basis von Polyacrylaten, bestehend aus a) 10 bis 80 Gew.-% eines Trägermediums, wobei es sich um ein oder mehrere Ester von Fettsäuren mit 8 bis 22 C-Atomen und 1- oder mehrwertigen Alkoholen handelt und b) 20 bis 90 Gew.-% eines oder mehrerer Polyacrylate, wobei die Zusammensetzungen hergestellt werden, indem man zunächst das Trägermedium in flüssiger Form vorlegt, dann die gewünschten Polyacrylat-Monomeren zudosiert und diese in situ zu den Polyacrylaten umsetzt. In einer Ausführungsform setzt man dabei solche Komponenten a) ein, die eine Jodzahl unterhalb von 80 aufweisen. In einer weiteren Ausführungsform setzt man solche Komponenten a) ein, die eine Jodzahl unterhalb von 10 aufweisen. Wie dem Fachmann bekannt wird durch die Jodzahl das Ausmaß charakterisiert, in dem eine Verbindung C=C-Doppelbindungen enthält. Die Bestimmung der Jodzahlen erfolgt im Rahmen der vorliegenden Erfindung durch die Methoden nach Hanus bzw. Wijs, die seit langem Bestandteil der Abteilung C-V der "DGF-Einheitsmethoden" sind oder durch die hierzu äquivalente Methode nach Fiebig (vergleiche Fat Sci. Technol. 1991, Nr. 1, Seiten 13-19).

Ein weiterer Erfindungsgegenstand ist die **Verwendung** von Zusammensetzungen zur Konfektionierung von Verlaufshilfsmitteln auf Basis von Polyacrylaten, wobei diese Zusammensetzungen bei 25° C flüssige und gießbar sind und aus

a) 10 bis 80 Gew.-% eines Trägermediums, wobei es sich um ein oder mehrere Ester von Fettsäuren mit 8 bis 22 C-Atomen und 1- oder mehrwertigen Alkoholen handelt und

b) 20 bis 90 Gew.-% eines oder mehrerer Polyacrylate.

bestehen.

Ein weiterer Erfindungsgegenstand ist ein **Verfahren** zur Herstellung von bei 25° C flüssigen und gießbaren Zusammensetzungen zur Konfektionierung von Verlaufshilfsmitteln auf Basis von Polyacrylaten, bestehend aus

a) 10 bis 80 Gew.-% eines Trägermediums, wobei es sich um ein oder mehrere Ester von Fettsäuren mit 8 bis 22 C-Atomen und 1- oder mehrwertigen Alkoholen handelt und

b) 20 bis 90 Gew.-% eines oder mehrerer Polyacrylate

wobei man zunächst das Trägermedium in flüssiger Form vorlegt, dann die gewünschten Polyacrylat-Monomeren zudosiert und diese in situ zu den Polyacrylaten umsetzt. In einer Ausführungsform setzt man dabei solche Komponenten a) ein, die eine Jodzahl unterhalb von 80 aufweisen. In einer weiteren Ausführungsform setzt man solche Komponenten a) ein, die eine Jodzahl unterhalb von 10 aufweisen. Bezüglich der Jodzahl gilt das oben Gesagte.

**Beispiele**

Eingesetzte Substanzen

| | |
|---|---|
| Loxiol G40: | Isotridecylstearat |
| Uralac P 5127: | Handelsübliches Polyesterharz (Fa. DSM) |
| Araldit GT 7004: | Handelsübliches Epoxidharz (Fa. Ciba-Geigy) |
| Kronos 2310: | Titandioxid (Fa. Kronos) |
| Benzoin | handelsübliche Chemikalie (Fa. Fluka) |
| Polyacrylat-Additiv I: | Bei 25 °C flüssige Mischung der folgenden Komponenten: 80 Gewichtsteile Polyacrylat und 20 Gewichtsteile Loxiol G 40. Diese Mischung von Polyacrylat und Loxiol G40 wurde wie folgt hergestellt: In einem 4-Liter-4-Halskolben mit Rührer, Kühler, zwei Tropftrichtern und Stickstoffdurchleitung wurden 600,0 g Loxiol G 40 eingewogen. Die Vorlage wurde im Ölbad auf 140° C erwärmt. Nach Erreichen der Zieltemperatur wurde damit begonnen, eine Mischung aus 1920,0 g Butylacrylat und 480,0 g 2-Ethylhexylacrylat sowie von 30,0 g t-Butylperbenzoat parallel zutropfen zu lassen. Die Zutropfraten wurden so eingestellt, dass die Monomerenmischung in fünf und der flüssige Radikalstarter innerhalb sechs Stunden gleichmäßig zugetropft waren. Die Reaktion verlief in einen Temperaturbereich von etwa 138°C bis 142°C. Nach Beendigung des Starterzulaufs wurde eine Stunde bei 140°C nachreagieren gelassen. <u>Aussehen des Produktes:</u> Hellgelbe klare Lösung. <u>Viskosität des Produktes</u> (gemessen nach Brookfield bei 25°C, 20 Upm, Spindel 5: 9840 mPas. |
| Polyacrylat-Masterbatch I: | Pulverförmige Mischung der folgenden Komponenten: 90 Gewichtsteile Uralac P 5127 und 10 Gewichtsteile des Polyacrylat-Additivs I. |
| Polyacrylat-Masterbatch II: | Pulverförmige Mischung der folgenden Komponenten: 90 Gewichtsteile Uralac P 5127 und 10 Gewichtsteile des Polyacrylat- Additivs I. |

**Meßmethoden**

**Wave-Scan-Methode**

Zur Bestimmung des Oberflächenprofils der applizierten, eingebrannten Lackfilme wurde die sogenannte Wave-Scan-Methode eingesetzt, die es gestattet, das sichtbare Profil von Lackfilmoberflächen zu vermessen. Hierzu wurde die Intensität der Reflektion ("Welligkeit") mittels des Gerätes "Wave Scan Plus" der Firma Byk-Gardner bei Raumtemperatur (20 °C) gemessen, wobei auf einer Strecke von 10 cm 1250 Messpunkte aufgenommen wurden. Die Reflektion wird vom Meßgerät in Langwelligkeit (Varianz der Lichtintensität für Strukturen von 0,6 bis 10mm) und Kurzwelligkeit (Strukturen von 0,1 bis 0,6 mm) unterteilt. Der Messbereich reicht jeweils von 0 bis 99,9 wobei 0 eine spiegelglatte Oberfäche bedeuten würde. Das bedeutet: je niedriger die Werte, desto besser ist der Verlauf des Lackfilmes.

**Visuelle Beurteilung**

Ergänzend wurde die Lackfilmoberfläche auf eventuelle Störungen wie etwa Nadelstiche oder Krater durch visuelle Beurteilung charakterisiert.

**Beispiel 1**

Stufe 1: Folgende Komponenten wurden zusammengewogen: 268 g Uralac 5127, 300 g Araldit GT 7004, 300 g Kronos 2310, 4,5 g Benzoin und 37 g Polyacrylat-Masterbatch I.

Stufe 2: Die Mischung wurde in einem Ankermischer der Fa. Mixaco vordispergiert, dann per Flexwalldosierer der Fa Brabender in einen Extruder ZSK 25 der Fa. Werner und Pfleiderer gegeben. Die Temperatur des Extruders betrug 100°C Drehzahl 300 upm. Der so hergestellte Hybridlack wurde per Ultrazentrifugalmühle ZM 100 bei 18000 Upm zerkleinert und über 100μm Schüttelsiebe abgesiebt.

Stufe 3: Der Lack wurde elektrostatisch per Spritzpistole PG1 von ITW GEMA mit etwa 80KV in einer Schichtdicke von durchschnittlich 64 μm auf phosphatierte Stahlbleche appliziert. Anschließend wurden die Bleche 20 Minuten bei 180°C eingebrannt und auf Verlaufeigenschaften visuell und per Wave-Scan geprüft.

Charakterisierung des Verlaufs der Lackoberfläche

durch Wave-Scan:

Long Wave-Wert = 49
Short-Wave-Wert = 54

visuell:

keine Oberflächendefekte sichtbar

**Beispiel 2**

Beispiel 1 wurde wiederholt, wobei jedoch in Stufe 1 folgende Komponenten zusammengewogen wurden: 238 g Uralac 5127, 300 g Araldit GT 7004, 300 g Kronos 2310, 4,5 g Benzoin und 74 g Polyacrylat-Masterbatch I. In Stufe 3 wurde der Lack in einer durchschnittlichen Schichtdicke von 64 μm aufgetragen.

Charakterisierung der Lackoberfläche

durch Wave-Scan:

Long Wave-Wert = 27
Short-Wave-Wert = 33

visuell:

keine Oberflächendefekte sichtbar

**Vergleichsbeispiel 1**

Stufe 1: Folgende Komponenten wurden zusammengewogen: 274,6 g Uralac 5127, 300 g Araldit GT 7004, 300 g Kronos 2310, 4,5 g Benzoin und 30,78 g Polyacrylat-Masterbatch II.

Stufe 2: Die Mischung wurde in einem Ankermischer der Fa. Mixaco vordispergiert, dann per Flexwalldosierer der Fa Brabender in einen Extruder ZSK 25 der Fa. Werner und Pleiderer gegeben. Die Temperatur des Extruders betrug 100°C Drehzahl 300 upm. Der so hergestellte Hybridlack wurde per Ultrazentrifugalmühle ZM 100 bei 18000 Upm zerkleinert und über 100 $\mu$m Schüttelsiebe abgesiebt.

Stufe 3: Der Lack wurde elektrostatisch per Spritzpistole PG1 von ITW GEMA mit etwa 80KV in einer Schichtdicke von 88 $\mu$m auf phosphatierte Stahlbleche appliziert. Anschließend wurden die Bleche 20 Minuten bei 180°C eingebrannt und auf Verlaufeigenschaften visuell und per WaveScan

Charakterisierung der Lackoberfläche

durch Wave-Scan:

Long Wave-Wert = 46
Short-Wave-Wert = 52

visuell:

Es waren vereinzelt Verlaufstörungen (Krater) in der Lackoberfäche zu beobachten.

**Vergleichsbeispiel 2**

Vergleichsbeispiel 1 wurde wiederholt, wobei jedoch in Stufe 1 folgende Komponenten zusammengewogen wurden: 250,4 g Uralac 5127, 300 g Araldit GT 7004, 300 g Kronos 2310, 4,5 g Benzoin und 61,6 g Polyacrylat-Masterbatch II. In Stufe 3 wurde der Lack in einer durchschnittlichen Schichtdicke von 64 $\mu$m aufgetragen.

Charakterisierung der Lackoberfläche

durch Wave-Scan:

Long Wave-Wert = 35
Short-Wave-Wert = 37

visuell:

keine Oberflächendefekte sichtbar

**Tabelle 1**

|  | Long-Wave-Wert | Short-Wave-Wert | Visuelle Beurteilung |
|---|---|---|---|
| Beispiel 1 | 49 | 54 | In Ordnung |
| Vergleichsbeispiel 1 | 46 | 52 | Enthält Krater |
| Beispiel 2 | 27 | 33 | In Ordnung |
| Vergleichsbeispiel 2 | 35 | 37 | In Ordnung |

**Herstellung einer erfindungsgemäßen Mischung von a) und b) unter in-situ-Herstellung der Komponente a)**

Hierzu sei auf das obige Kapitel "Eingesetzte Substanzen" und zwar auf die Ausführungen unter " Polyacrylat-Additiv I" verwiesen. Dort ist explizit die Herstellung einer bei 25 °C flüssigen Mischung aus Polyacrylat und Loxiol G 40 beschrieben. Die Mischung wies eine Viskosität von 9840 mPas auf (gemessen nach Brookfield bei 25°C, 20 Upm, Spindel 5).

**Patentansprüche**

1. Bei 25° C flüssige und gießbare Zusammensetzungen zur Konfektionierung von Verlaufshilfsmitteln auf Basis von Polyacrylaten, bestehend aus

   a) 10 bis 80 Gew.-% eines Trägermediums, wobei es sich um ein oder mehrere Ester von Fettsäuren mit 8 bis 22 C-Atomen und 1- oder mehrwertigen Alkoholen handelt und
   b) 20 bis 90 Gew.-% eines oder mehrerer Polyacrylate.

2. Zusammensetzungen nach Anspruch 1, wobei das Trägermedium Isotridecylstearat ist.

3. Zusammensetzungen nach Anspruch 1 oder 2, wobei das Polyacrylat ein Copolymer aus Butylacrylat und 2-Ethylhexylacrylat ist.

4. Zusammensetzungen nach einem der Ansprüche 1 bis 3, wobei die Zusammensetzung hergestellt wird, indem man zunächst das Trägermedium a) in flüssiger Form vorlegt, dann die gewünschten Polyacrylat-Monomeren zudosiert und diese in situ zu den Polyacrylaten b) umsetzt.

5. Verwendung von Zusammensetzungen zur Konfektionierung von Verlaufshilfsmitteln auf Basis von Polyacrylaten, **dadurch gekennzeichnet, daß** diese Zusammensetzungen bei 25° C flüssige und gießbar sind und aus

   a) 10 bis 80 Gew.-% eines Trägermediums, wobei es sich um ein oder mehrere Ester von Fettsäuren mit 8 bis 22 C-Atomen und 1- oder mehrwertigen Alkoholen handelt und
   b) 20 bis 90 Gew.-% eines oder mehrerer Polyacrylate.

   bestehen.

6. Verfahren zur Herstellung von bei 25° C flüssigen und gießbaren Zusammensetzungen zur Konfektionierung von Verlaufshilfsmitteln auf Basis von Polyacrylaten, bestehend aus

   a) 10 bis 80 Gew.-% eines Trägermediums, wobei es sich um ein oder mehrere Ester von Fettsäuren mit 8 bis 22 C-Atomen und 1- oder mehrwertigen Alkoholen handelt und
   b) 20 bis 90 Gew.-% eines oder mehrerer Polyacrylate

   wobei man zunächst das Trägermedium in flüssiger Form vorlegt, dann die gewünschten Polyacrylat-Monomeren zudosiert und diese in situ zu den Polyacrylaten umsetzt.

**Claims**

1. Compositions which are liquid and pourable at 25°C for the formulation of polyacrylate-based flow controllers, **characterized in that** they consist of

   a) 10 to 80% by weight of a carrier medium in the form of one or more esters of $C_{8-22}$ fatty acids and mono- or polyhydric alcohols and
   b) 20 to 90% by weight of one or more polyacrylates.

2. Compositions as claimed in claim 1, **characterized in that** the carrier medium is isotridecyl acrylate.

3. Compositions as claimed in claim 1 or 2, **characterized in that** the polyacrylate is a copolymer of butyl acrylate and 2-ethylhexyl acrylate.

4. Compositions as claimed in any of claims 1 to 3, **characterized in that** the composition is prepared by first introducing the carrier medium a) in liquid form, then adding the desired polyacrylate monomers and reacting them in situ to form the polyacrylates b).

5. The use of compositions for formulating polyacrylate-based flow controllers, **characterized in that** the compositions are liquid and pourable at 25°C and consist of

   a) 10 to 80% by weight of a carrier medium in the form of one or more esters of $C_{8-22}$ fatty acids and mono- or polyhydric alcohols and
   b) 20 to 90% by weight of one or more polyacrylates.

6. A process for the production of compositions for the formulation of polyacrylate-based flow controllers which are liquid and pourable at 25°C and which consist of

   a) 10 to 80% by weight of a carrier medium in the form of one or more esters of $C_{8-22}$ fatty acids and mono- or polyhydric alcohols and
   b) 20 to 90% by weight of one or more polyacrylates,

   **characterized in that** the carrier medium is first introduced in liquid form, the desired polyacrylate monomers are then added and are reacted in situ to form the polyacrylates.

**Revendications**

1. Compositions fluides à 25 °C et coulables pour la préparation d'adjuvants de structuration à base de polyacrylates, composées de

   a) 10 à 80 % en poids d'un milieu support, constitué par un ou plusieurs esters d'acides gras comportant de 8 à 22 atomes de C et d'alcools mono- ou polyvalents, et
   b) 20 à 90 % en poids d'un ou de plusieurs polyacrylate(s).

2. Compositions selon la revendication 1, dans lesquelles le milieu support est le stéarate d'isotridécyle.

3. Compositions selon la revendication 1 ou 2, dans lesquelles le polyacrylate est un copolymère d'acrylate de butyle et d'acrylate de 2-éthylhexyle.

4. Compositions selon l'une des revendications 1 à 3, dans lesquelles la composition est préparée en mettant d'abord en oeuvre le milieu support a) sous forme fluide, puis en ajoutant de manière dosée les monomères de polyacrylate souhaités et en les transformant in situ en polyacrylates b).

5. Utilisation de compositions pour la préparation d'adjuvants de structuration à base de polyacrylates, **caractérisée en ce que** ces compositions sont fluides à 25 °C et coulables et se composent de

a) 10 à 80 % en poids d'un milieu support, constitué par un ou plusieurs esters d'acides gras comportant de 8 à 22 atomes de C et d'alcools mono- ou polyvalents et

b) 20 à 90 % en poids d'un ou de plusieurs polyacrylates.

6. Procédé d'obtention de compositions fluides à 25 °C et coulables pour la préparation d'adjuvants de structuration à base de polyacrylates, composées de

a) 10 à 80 % en poids d'un milieu support, constitué par ou plusieurs esters d'acides gras comportant de 8 à 22 atomes de C et d'alcools mono- ou polyvalents, et

b) 20 à 90 % en poids d'un ou de plusieurs polyacrylates,

selon lequel on met d'abord en oeuvre le milieu support sous forme fluide, puis on ajoute de manière dosée les monomères de polyacrylate souhaités et on les transforme in situ en polyacrylates.